# EUROPÄISCHE PATENTSCHRIFT

(11) **EP 0 684 917 B1**
(45) Veröffentlichungstag und Bekanntmachung des Hinweises auf die Patenterteilung: **29.01.1997**
(21) Anmeldenummer: 94909016.1
(22) Anmeldetag: 22.02.1994
(51) Int. Cl.: B62D 5/08

(54) **HILFSKRAFTLENKUNG FÜR KRAFTFAHRZEUGE**
POWER-ASSISTED STEERING FOR MOTOR VEHICLES
DIRECTION ASSISTEE POUR VEHICULES AUTOMOBILES

(30) Priorität: 26.02.1993 DE 4305932
(43) Veröffentlichungstag der Anmeldung: 06.12.1995
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE)
(86) Internationale Anmeldenummer: EP9400499
(87) Internationale Veröffentlichungsnummer: WO9419226

(56) Entgegenhaltungen:
- WO-A-85/01924
- DE-A- 4 126 020
- FR-A- 2 383 057
- GB-A- 662 724
- US-A- 3 750 836

## Beschreibung

Die Erfindung betrifft eine Hilfskraftlenkung für Kraftfahrzeuge nach dem Oberbegriff des Anspruchs 1. Die Hilfskraftlenkung enthält ein Lenkventil, das zwei Einlaß-Sitzventile und zwei Auslaß-Sitzventile aufweist, deren Schließkörper über Betätigungsstößel gegen die Kraft von Zentrierfedern in Abhängigkeit von einer Drehbewegung einer Lenkspindel verschiebbar sind. Dabei sind die Schließkörper der Einlaß-Sitzventile durch die Kraft von Druckfedern in Schließrichtung beaufschlagbar, so daß die Einlaß-Sitzventile in der Neutralstellung des Lenkventils geschlossen sind. Die Auslaß-Sitzventile sind in der Neutralstellung des Lenkventils geöffnet. Die Einlaß-Sitzventile werden erst nach dem Schließen des jeweiligen zugehörigen AuslaßSitzventils geöffnet.

Eine derartige Hilfskraftlenkung mit geschlossener Mitte ist bekannt aus der DE-A1-41 26 020. Eine solche Hilfskraftlenkung weist einen linearen Kennlinienverlauf auf. Dies bedeutet, daß bei hohen Servodrücken das Betätigungsmoment stark ansteigen kann.

Bei heute gebräuchlichen Hilfskraftlenkungen mit offener Mitte ist es jedoch üblich, das Betätigungsmoment ab einem bestimmten Druck im Servomotor nur noch unwesentlich zu erhöhen. Dies bedeutet, daß die Kennlinie ab diesem bestimmten Punkt steiler verläuft. Man nennt diesen Effekt "Abschneidung" oder "Betätigungsmomentbegrenzung".

Der Erfindung liegt die Aufgabe zugrunde, eine gattungsgemäße Hilfskraftlenkung, d. h. eine Hilfskraftlenkung mit geschlossener Mitte, derart zu verbessern, daß mit ihrem Lenkventil Kennlinien erzeugt werden können, die in ihrer Form den Kennlinien heute gebräuchlicher Hilfskraftlenkungen mit offener Mitte möglichst nahe kommen.

Diese Aufgabe wird durch die im Anspruch 1 gekennzeichnete Hilfskraftlenkung gelöst. Die Lösung erfolgt insbesondere dadurch, daß für jede Seite des Lenkventils ein Begrenzungskolben vorgesehen ist, der einerseits von einer der Zentrierfedern und von dem in einem Arbeitsraum eines Servomotors herrschenden ersten Druck und andererseits von einer Begrenzungskraft beaufschlagt ist. Die Begrenzungskraft ist in Neutralstellung des Lenkventils größer als die Kraft der Zentrierfeder, so daß der Begrenzungskolben an einer Schulter eines das Lenkventil aufnehmenden Gehäuses anliegt. Dadurch werden ab einem bestimmten Servodruck die mechanischen Zentrierkräfte des Lenkventils reduziert.

Zweckmäßige und vorteilhafte Ausgestaltungen der Erfindung sind in den Unteransprüchen angegeben.

Die Begrenzungskraft kann erzeugt werden durch eine Begrenzungsfeder und/oder einen zweiten Druck, der aus einem Speicher entnommen wird und in einer Begrenzungskammer wirkt.

Wird für die Erzeugung der Begrenzungskraft nur eine Begrenzungsfeder verwendet, so muß die Vorspannkraft dieser Feder größer sein als die Kraft der Zentrierfeder. Dann ist es zweckmäßig, die von dem Rücklaufdruck beaufschlagte Begrenzungskammer durch eine Durchgangsbohrung in dem Betätigungsstößel mit dem Druckmittelbehälter zu verbinden. Dazu weist der Betätigungsstößel einen koaxialen Fortsatz auf, der durch den Begrenzungskolben dichtend hindurchgeführt ist.

Legt man dagegen Wert auf kleinere Abmessungen der Federn und will man insbesondere vermeiden, daß die Begrenzungsfeder stärker ausgebildet werden muß als die Zentrierfeder, so wird die Begrenzungskammer mit einem zweiten Druck beaufschlagt, der über ein Druckminderventil aus dem in einem Speicher herrschenden Druck erzeugt wird. Durch entsprechende Auswahl dieses Druckes kann theoretisch die Begrenzungsfeder ganz entfallen. Außerdem ist es mit dieser Anordnung möglich, durch eine entsprechende elektronische Regelung diesen Druck beispielsweise in Abhängigkeit von der Fahrzeuggeschwindigkeit oder anderen Fahrparametern, z. B. dem Radschlupf, zu variieren und damit eine geschwindigkeits- bzw. anderweitig abhängige Rückwirkungskraft zu erzeugen.

Wird für die Erzeugung der Begrenzungskraft alleine ein bestimmter, festgelegter Druck gewünscht, so kann das Druckminderventil entfallen, wenn ein Hilfskolben vom Speicherdruck beaufschlagt auf den Begrenzungskolben wirkt. Der Hilfskolben hat einen kleineren Durchmesser als der Begrenzungskolben.

Gemäß einem weiteren Ausführungsbeispiel soll der Fortsatz eine Anschlagscheibe tragen, über die der Betätigungsstößel nach einem bestimmten Weg des Begrenzungskolbens von diesem mitgenommen wird. Damit kann man, wenn die Vorspannkraft der Zentrierfeder aufgebraucht ist, die ansteigende hydraulische Kraft am Begrenzungskolben zur Entlastung der auf die Betätigungsstößel wirkenden Betätigungseinrichtung übertragen.

Sollten die hydraulischen Kräfte, die auf die Anschlagscheibe wirken, zu groß werden, so können diese Kräfte dadurch reduziert werden, daß der Schließkörper des Einlaß-Sitzventils nach einem bestimmten Weg des Begrenzungskolbens über eine zwischen diesen beiden Teilen angeordnete verschiebbare Hülse mitgenommen wird.

Um auch bei einer Hilfskraftlenkung mit geschlossener Mitte bei fehlendem Durchlaufdruck eine gute Befüllung des Servomotors sicherzustellen, sind Nachsaugventile erforderlich. Ohne zusätzlichen Bauaufwand können solche Nachsaugventile sehr einfach in den Begrenzungskolben angeordnet werden.

Im folgenden wird die Erfindung anhand mehrerer in der Zeichnung dargestellter Ausführungsbeispiele näher erläutert.
Wegen der einfachen Darstellung wird die Erfindung anhand einer Zahnstangen-Hilfskraftlenkung beschrieben. Die Erfindung ist jedoch auch für andere Hilfskraftlenkungen, beispielsweise Kugelmutter-Hilfskraftlenkungen, anwendbar.
Es zeigen:
- Fig. 1: einen Längsschnitt durch die erfindungsgemäße Hilfskraftlenkung in einem ersten Ausführungsbeispiel;
- Fig. 2 bis 9: Teil-Längsschnitte durch die Hilfskraftlenkung im Bereich des einen Teils des Lenkventils nach verschiedenen Ausführungsbeispielen in vergrößertem Maßstab.

In einem Lenkgehäuse 1 ist ein Ritzel 2 in zwei Lagern 3 und 4 drehbar gelagert. Das Ritzel 2 trägt an seinem einen Ende einen Lenkspindelanschluß 5 für den Anschluß an ein Lenkorgan, beispielsweise eine nicht dargestellte Lenkspindel mit einem Lenkhandrad. Eines der Lager, vorzugsweise das Lager 3, das in der Nähe des Lenkspindelanschlusses 5 liegt, ist als Festlager ausgebildet. Das andere Lager, vorzugsweise das Lager 4, das dem Lenkspindelanschluß 5 abgewandt ist, ist als Loslager ausgebildet. Das Ritzel 2 steht über seine Verzahnung in Eingriff mit einer Zahnstange 6, die in dem Lenkgehäuse 1 axial verschiebbar geführt ist. Der Außenring 7 des Lagers 4 ist in dem Lenkgehäuse 1 derart geführt, daß er sich entsprechend der Bewegung des unteren Teiles des Ritzels 2 senkrecht zu dessen Achse reibungsarm bewegen kann. Die Bedeutung dieser Bewegung wird im weiteren Verlauf der Beschreibung erklärt werden.

Ein Lenkventil 8 steuert das Druckmittel, das von einer nicht dargestellten Servopumpe gefördert und zweckmäßigerweise in einem Speicher gespeichert wird, zu und von den Druckräumen eines nicht dargestellten Servomotors. Das Lenkventil 8 enthält zwei Einlaß-Sitzventile 10 und 11 und zwei Auslaß-Sitzventile 12 und 13. Die Einlaß- und Auslaß-Sitzventile 10, 11, 12, 13 sind im wesentlichen senkrecht zur Achse des Ritzels 2 im Bereich des Loslagers 4 angeordnet. Dabei sind jeweils ein Einlaß-Sitzventil 10 bzw. 11 und ein Auslaß-Sitzventil 12 bzw. 13 koaxial zueinander angeordnet.

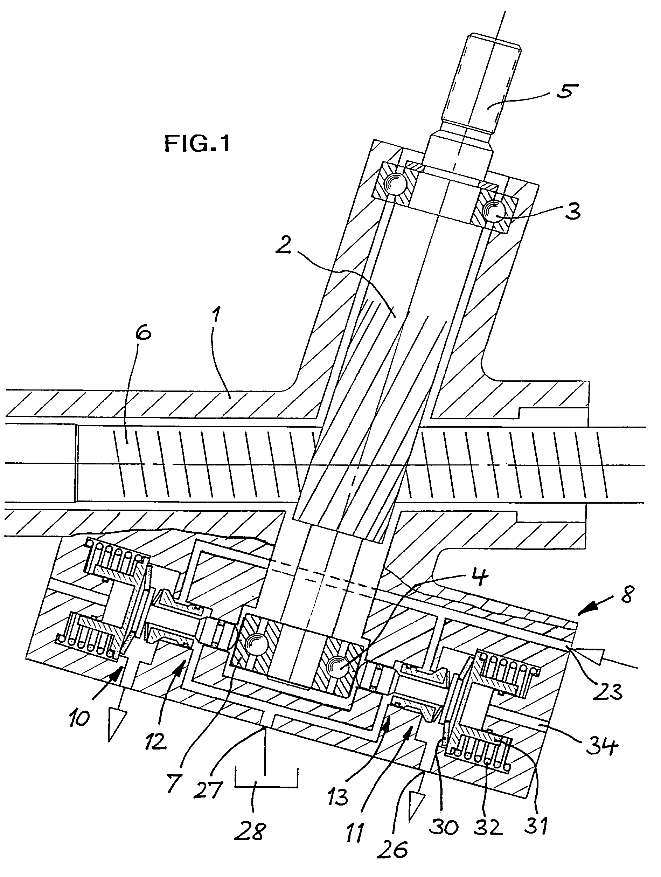

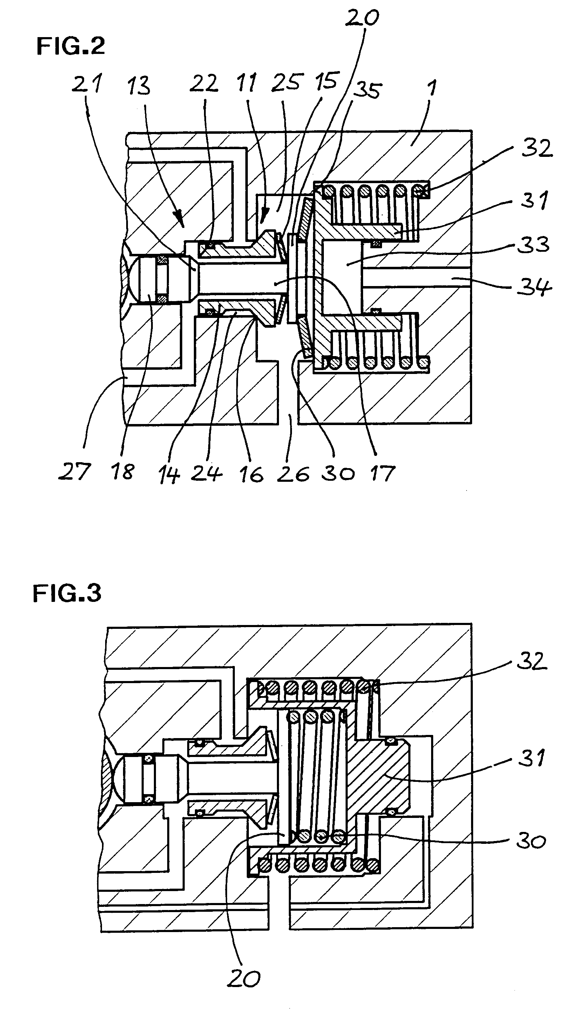

Die beiden Teile des Lenkventils 8 mit je einem Einlaß-Sitzventil 10 bzw. 11 und je einem Auslaß-Sitzventil 12 bzw. 13 sind im wesentlichen gleich ausgebildet. Der genauere Aufbau des Lenkventils 8 wird deshalb im folgenden anhand nur eines Teiles - in Fig. 1 der rechte Teil - des Lenkventils 8 mit dem Einlaß-Sitzventil 11 und dem Auslaß-Sitzventil 13 anhand des in Fig. 2 dargestellten, vergrößerten Ausschnittes beschrieben.

In der Neutralstellung des Lenkventils 8 ist das Einlaß-Sitzventil 11 geschlossen. Dies wird dadurch erreicht, daß dessen Schließkörper 14 durch die Kraft einer Druckfeder 15 in der Form einer Tellerfeder in Schließrichtung gegen einen gehäusefesten Ventilsitz 16 beaufschlagbar ist. Die Druckfeder 15 stützt sich einerseits an dem Schließkörper 14 und andererseits an einem Teil 17 eines Betätigungsstößels 18 ab. Der Teil 17 des Betätigungsstößels 18 weist einen Bund 20 auf und geht durch eine Bohrung des Schließkörpers 14 hindurch und ist an dem eigentlichen Betätigungsstößel 18 befestigt. An dem Betätigungsstößel 18 ist ein Schließkörper 21 des Auslaß-Sitzventils 13 ausgebildet, der mit einem an dem Schließkörper 14 angeordneten Ventilsitz 22 zusammenwirkt.

Zur Versorgung der Lenkung mit von der Servopumpe gefördertem Druckmittel ist ein Zulaufanschluß 23 vorgesehen. Der Zulaufanschluß 23 steht über entsprechende Kanäle mit einer Zulaufkammer 24 in Verbindung, die an dem Einlaß-Sitzventil 10 angeordnet ist. Eine Kammer 25, die in der Neutralstellung des Lenkventils 8 von der Zulaufkammer 24 getrennt ist, steht mit einem Zylinderanschluß 26 in Verbindung. Außerdem ist die Kammer 25 über nicht dargestellte Durchbrüche in dem Schließkörper 14 über das in der Neutralstelllung des Lenkventils 8 offene Auslaß-Sitzventil 13 mit einem Rücklaufanschluß 27 und damit mit einem Druckmittelbehälter 28 verbunden.

Auf den Betätigungsstößel 18 wirkt eine Zentrierfeder 30, die den Betätigungsstößel 18 in Anlage an dem Außenring 7 des Lagers 4 hält. Die Zentrierfeder 30 ist in dem Ausführungsbeispiel nach Fig. 2 als Tellerfeder und in dem Ausführungsbeispiel nach Fig. 3 als Schraubenfeder ausgebildet. Sie stützt sich einerseits an dem Bund 20 des Betätigungsstößels 18 und andererseits an einem Begrenzungskolben 31 ab.

Aus der bisherigen Beschreibung geht hervor, daß der Begrenzungskolben 31 auf seiner einen Seite, die dem Einlaß-Sitzventil 11 zugewandt ist, erstens von der Zentrierfeder 30 und zweitens von dem in der Kammer 25 herrschenden ersten Druck beaufschlagt wird. Da die Kammer 25 mit dem Zylinderanschluß 26 verbunden ist, entspricht dieser erste Druck dem Arbeitsdruck in einem Arbeitsraum des Servomotors. Auf der dem Einlaß-Sitzventil 11 abgewandten Seite ist der Begrenzungskolben 31 von einer Begrenzungskraft beaufschlagt, die von einer Begrenzungsfeder 32 und/oder von einem zweiten Druck erzeugt wird.

In dem Ausführungsbeispiel nach Fig. 1 und 2 wirkt nur die Begrenzungsfeder 32. Der Druck in einer Begrenzungskammer 33, die an den Begrenzungskolben 31 angrenzt, entspricht dem in dem Druckmittelbehälter 28 herrschenden Rücklaufdruck. Die Begrenzungskammer 33 ist zu diesem Zweck durch eine nur angedeutete Leitung 34 mit dem Druckmittelbehälter 28 verbunden.

Die Begrenzungsfeder 32 wird über eine Anschlagschulter 35 in dem Lenkgehäuse 1 vorgespannt. Damit in der Neutralstellung des Lenkventils 8 der Begrenzungskolben 31 sicher an der Anschlagschulter 35 anliegt, muß im drucklosen Zustand die Vorspannkraft der Begrenzungsfeder 32 größer sein als die Kraft der Zentrierfeder 30.

Im folgenden wird die Funktion der erfindungsgemäßen Hilfskraftlenkung beschrieben: Wird durch eine Drehung des nicht dargestellten Lenkhandrades das Ritzel 2 beispielsweise im Sinne einer Linksdrehung gedreht, so wälzt sich die Verzahnung des Ritzels 2 zunächst an der Verzahnung der momentan noch feststehenden Zahnstange 6 ab. Dadurch wird das Ritzel 2 um das Festlager 3 um einen sehr geringen Winkel geschwenkt. Das Loslager 4 wird nach rechts verschoben. Diese Bewegung wird über den Außenring 7 des Loslagers 4 auf den Betätigungsstößel 18 und damit auf den Schließkörper 21 des Auslaß-Sitzventils 13 übertragen. Der Schließkörper 21 wird in Fig. 2 so weit gegen die Kraft der Zentrierfeder 30 nach rechts bewegt, bis er an dem Ventilsitz 22 anliegt und damit die Verbindung von dem Zylinderanschluß 26 zum Druckmittelbehälter 28 unterbrochen ist. Bis zu diesem Punkt der Bewegung wirkt die Druckfeder 15 auf den Schließkörper 14 des Einlaß-Sitzventils 11, so daß dieses geschlossen bleibt. Die Druckfeder 15 ist in ihrer Federkraft und in ihrer Einbaulage derart ausgelegt, daß sie in der Neutralstellung des Lenkventils 8 eine Schließkraft auf den Schließkörper 14 ausübt, daß diese Schließkraft mit zunehmender Bewegung des Betätigungsstößels 18 abnimmt und daß die Druckfeder 15 in dem Augenblick, in dem der Schließkörper 21 an dem Ventilsitz 22 dichtend anstößt, nur noch kräftefrei an dem Schließkörper 14 anliegt. Bei der weiteren Bewegung des Betätigungsstößels 18 wird sich deshalb der Schließkörper 14 von seinem Ventilsitz 16 abheben, so daß eine Verbindung hergestellt wird von dem Zulaufanschluß 23 über die Zulaufkammer 24 und die Kammer 25 zu dem Zylinderanschluß 26. Dort wird ein entsprechender Druck aufgebaut, der in bekannter Weise im Sinne einer hydraulischen Rückwirkung der Betätigungskraft an dem Betätigungsstoßel 18 die Waage hält.

In diesem Zeitpunkt wirkt demnach auf den Betätigungsstoßel 18 erstens die Kraft der Zentrierfeder 30 und zweitens die Kraft des in der Kammer 25 herrschenden ersten Druckes, der dem Arbeitsdruck entspricht. Diese beiden Kräfte wirken ebenso auf den Begrenzungskolben 31.

Von einem bestimmten Punkt der Bewegung des Betätigungsstößels 18 und damit von einer bestimmten Höhe der auf den Begrenzungskolben 31 wirkenden Kräfte ab wird die Vorspannkraft der Begrenzungsfeder 32 überwunden. Der Begrenzungskolben 31 wird nach rechts bewegt, wodurch sich die Kraft der Zentrierfeder 30 vermindert. Dadurch vermindert sich der weitere Kraftanstieg an dem Betätigungsstößel 18 und damit indirekt auch an dem Lenkhandrad.

Im folgenden werden die Merkmale der weiteren Ausführungsbeispiele näher beschrieben:

Die Ausführungsbeispiele der Fig. 2 und 3 unterscheiden sich im wesentlichen durch die unterschiedliche Ausbildung der Zentrierfeder 30, wie dies bereits beschrieben ist.

Bei dem Ausführungsbeispiel nach Fig. 3 lassen sich die Zentrierfeder 30 und die Begrenzungsfeder 32 ineinander schachteln.

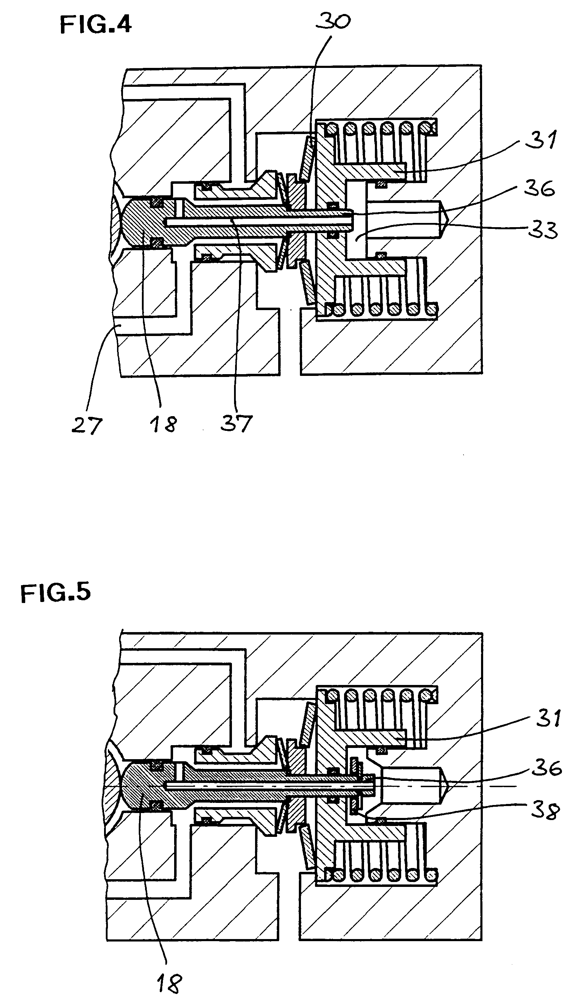

Das Ausführungsbeispiel der Fig. 4 zeigt eine einfache Möglichkeit, wie die Begrenzungskammer 33 mit dem Rücklaufanschluß 27 verbunden werden kann. Dazu wird der Betätigungsstößel 18 mit einem koaxialen Fortsatz 36 versehen, der durch den Begrenzungskolben 31 dichtend hindurchgeführt ist. Durch den Betätigungsstößel 18 und den Fortsatz 36 geht eine Durchgangsbohrung 37 hindurch, die die Begrenzungskammer 33 mit dem Rücklaufanschluß 27 verbindet.

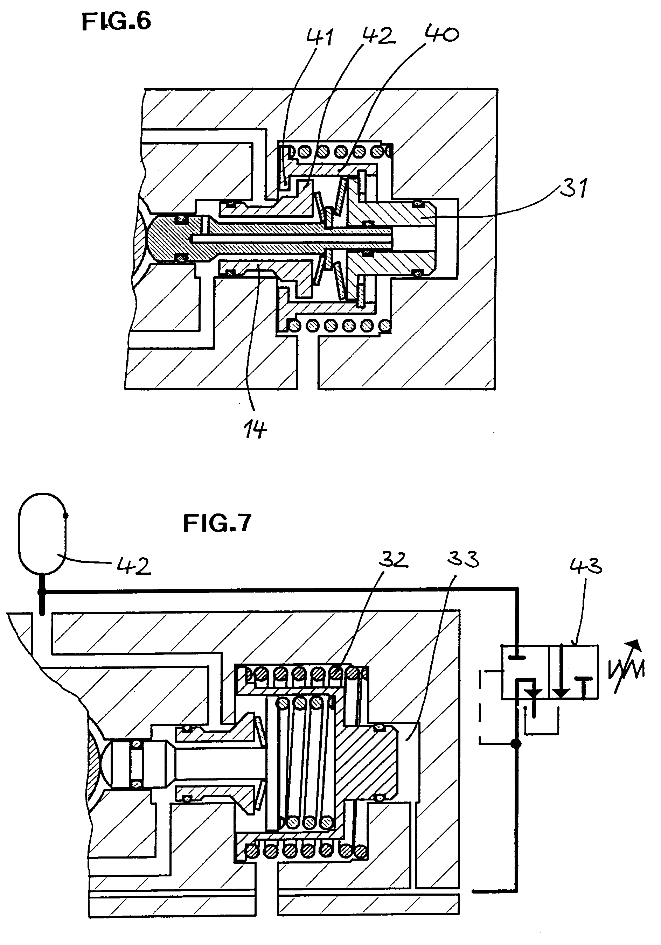

In dem Ausführungsbeispiel nach Fig. 5 wird gezeigt, wie nach aufgebrauchter Vorspannkraft der Zentrierfeder 30 die auf den Begrenzungskolben 31 wirkende hydraulische Kraft auf den Betätigungsstößel 18 übertragen werden kann. Wird nämlich an dem Fortsatz 36 eine Anschlagscheibe 38 befestigt, so wird nach einer bestimmten Bewegung des Begrenzungskolbens 31 der Betätigungsstößel 18 mitgenommen und von der Betätigungseinrichtung, d. h. von dem Außenring 7 des Lagers 4, abgehoben. Damit wird das Lenkhandrad weiter entlastet.

Eine weitere Möglichkeit, den Betätigungsstößel 18 und damit das Betätigungsorgan und das Lenkhandrad zu entlasten, ist in Fig. 6 dargestellt. Hier ist koaxial zu dem Begrenzungskolben 31 eine verschiebbare Hülse 40 angeordnet, über die der Schließkörper 14 des Einlaß-Sitzventils 11 nach einem bestimmten Weg des Begrenzungskolbens 31 mitgenommen wird. Die Hülse 40 trägt einen Bund 41, der an einem Bund 42 des Schließkörpers 14 angreift.

In den bisherigen Ausführungsbeispielen mußte die Vorspannkraft der Begrenzungsfeder 32 in der Neutralstellung des Lenkventils 8 größer sein als die Kraft der Zentrierfeder 30. In dem Ausführungsbeispiel nach Fig. 7 ist eine Möglichkeit dargestellt, wie auf den Kräfteüberschuß der Begrenzungsfeder 32 gegenüber der Zentrierfeder 30 verzichtet werden kann. Dazu wird die Begrenzungskammer 33 nicht mit dem Rücklaufdruck, sondern mit einem bestimmten, einstellbaren oder regelbaren Druck beaufschlagt. Dieser Druck wird auf einfache Weise erzeugt, indem der oben bereits erwähnte Speicher, jetzt mit 42 bezeichnet, über ein Druckminderventil 43 mit der Begrenzungskammer 33 verbunden wird. Durch eine entsprechend gewählte Druckhöhe kann die Begrenzungsfeder 32 stark verkleinert und gegebenenfalls sogar ganz weggelassen werden. Durch eine entsprechende elektronische Regelung kann über das Druckminderventil 43 der Druck beispielsweise in Abhängigkeit von der Fahrzeuggeschwindigkeit variiert werden.

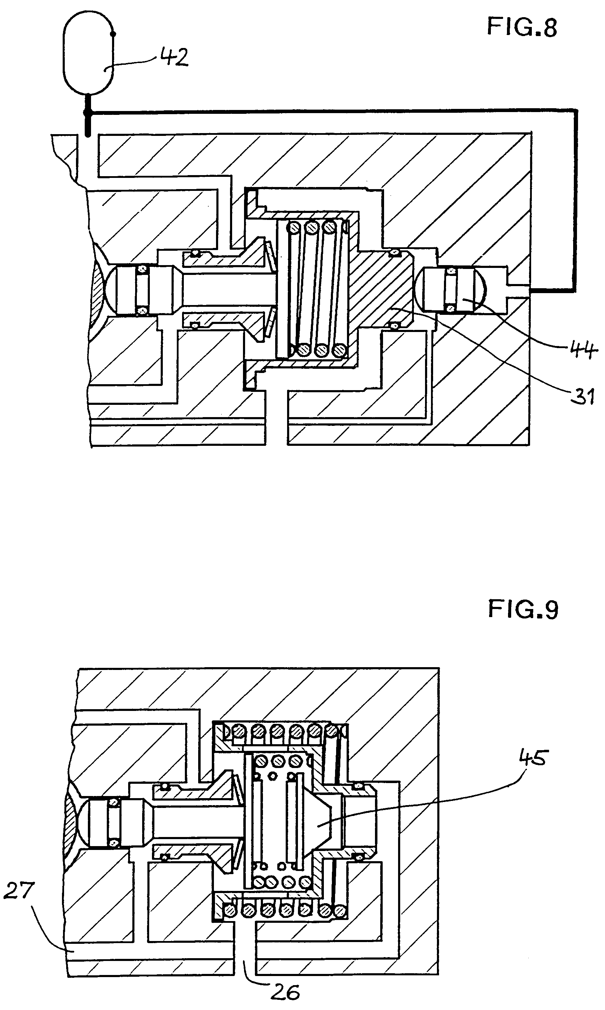

Soll auf die Begrenzungsfeder ganz verzichtet werden und muß der Druck in der Begrenzungskammer 33 nicht veränderbar sein, so wird der Druck aus dem Speicher 42 direkt auf einen Hilfskolben 44 geleitet (Fig. 8). Der Hilfskolben 44 wirkt auf den Begrenzungskolben 31. Der Durchmesser des Hilfskolbens 44 ist kleiner als der Durchmesser des Begrenzungskolbens 31.

Bei dem Ausführungsbeispiel nach Fig. 9 ist in dem Begrenzungskolben 31 ein Nachsaugventil 45 integriert. Dadurch wird bei einem fehlenden Durchlaufdruck eine gute Befüllung der Arbeitsräume des Servomotors sichergestellt, indem eine Verbindung von dem Rücklaufanschluß über das Nachsaugventil 45 zu dem Zylinderanschluß 26 hergestellt wird.

### Bezugszeichen

- 1: Lenkgehäuse
- 2: Ritzel
- 3: Lager
- 4: Lager
- 5: Lenkspindelanschluß
- 6: Zahnstange
- 7: Außenring
- 8: Lenkventil
- 9: -
- 10: Einlaß-Sitzventil
- 11: Einlaß-Sitzventil
- 12: Auslaß-Sitzventil
- 13: Auslaß-Sitzventil
- 14: Schließkörper
- 15: Druckfeder (Tellerfeder)
- 16: Ventilsitz
- 17: Teil von 18
- 18: Betätigungsstößel
- 19: -
- 20: Bund
- 21: Schließkörper
- 22: Ventilsitz
- 23: Zulaufanschluß
- 24: Zulaufkammer
- 25: Kammer
- 26: Zylinderanschluß
- 27: Rücklaufanschluß
- 28: Druckmittelbehälter
- 29: -
- 30: Zentrierfeder
- 31: Begrenzungskolben
- 32: Begrenzungsfeder
- 33: Begrenzungskammer
- 34: Leitung
- 35: Anschlagschulter
- 36: Fortsatz
- 37: Durchgangsbohrung
- 38: Anschlagscheibe
- 39: -
- 40: Hülse
- 41: Bund
- 42: Speicher
- 43: Druckminderventil
- 44: Hilfskolben
- 45: Nachsaugventil

## Patentansprüche

1. Hilfskraftlenkung für Kraftfahrzeuge, mit einem Lenkventil (8), das zwei Einlaß-Sitzventile (10, 11) und zwei Auslaß-Sitzventile (12, 13) aufweist, deren Schließkörper (14, 18) über Betätigungsstößel (16, 17) gegen die Kraft von Zentrierfedern (30) in Abhängigkeit von einer Drehbewegung einer Lenkspindel verschiebbar sind,
wobei die Schließkörper (14) der Einlaß-Sitzventile (10, 11) durch die Kraft von Druckfedern (15) in Schließrichtung beaufschlagbar und dadurch in der Neutralstellung des Lenkventils (8) geschlossen sind,
wobei die Auslaß-Sitzventile (12, 13) in der Neutralstellung des Lenkventils (8) geöffnet sind und
wobei die Einlaß-Sitzventile (10, 11) erst nach dem Schließen des jeweiligen zugehörigen Auslaß-Sitzventils (12, 13) geöffnet werden,
dadurch **gekennzeichnet,**
- daß jedem Einlaß-Sitzventil (10, 11) ein Begrenzungskolben (31) zugeordnet ist,
- daß jeder Begrenzungskolben (31) einerseits von einer der Zentrierfedern (30) und von dem in einem Arbeitsraum eines Servomotors herrschenden ersten Druck und andererseits von einer Begrenzungskraft beaufschlagt ist, die in Neutralstellung des Lenkventils (8) größer ist als die Kraft der Zentrierfeder (30) und
- daß der Begrenzungskolben (31) in der Neutralstellung des Lenkventils (8) an einer Anschlagschulter (35) eines das Lenkventil (8) aufnehmenden Lenkgehäuse (1) anliegt.

2. Hilfskraftlenkung nach Anspruch 1, dadurch **gekennzeichnet,** daß der Querschnitt des Begrenzungskolbens (31) kleiner ist als der wirksame Querschnitt des Schließkörpers (14).

3. Hilfskraftlenkung nach Anspruch 1 oder 2, dadurch **gekennzeichnet,** daß die Begrenzungskraft erzeugt wird durch eine Begrenzungsfeder (32), deren Vorspannkraft in der Neutralstellung des Lenkventils (8) größer ist als die Kraft der Zentrierfeder (30).

4. Hilfskraftlenkung nach einem der Ansprüche 1 bis 3, dadurch **gekennzeichnet,** daß die Begrenzungskraft aus dem in einem Speicher (42) herrschenden Druck erzeugt wird. (Fig. 7)

5. Hilfskraftlenkung nach Anspruch 4, dadurch **gekennzeichnet,** daß die Begrenzungskraft aus dem in dem Speicher (42) herrschenden Druck über ein Druckminderventil (43) erzeugt wird. (Fig. 1)

6. Hilfskraftlenkung nach Anspruch 5, dadurch **gekennzeichnet,** daß das Druckminderventil (43) in Abhängigkeit von der Fahrzeuggeschwindigkeit regelbar ist.

7. Hilfskraftlenkung nach Anspruch 4, dadurch **gekennzeichnet,** daß die Begrenzungskraft durch einen Hilfskolben (44) auf den Begrenzungskolben (31) übertragen wird, wobei der Durchmesser des Hilfskolbens (44) kleiner ist als der Durchmesser des Begrenzungskolbens (31) (Fig. 8)

8. Hilfskraftlenkung nach Anspruch 4, dadurch **gekennzeichnet,**
- daß jeder Betätigungsstößel (18) einen koaxialen Fortsatz (36) aufweist, der durch den Begrenzungskolben (31) in eine Begrenzungskammer (33) dichtend hindurchgeführt ist und
- daß der Betätigungsstößel (18) und der Fortsatz (36) eine Durchgangsbohrung (37) aufweisen, über die die Begrenzungskammer (33) mit dem Druckmittelbehälter (28) verbunden ist. (Fig. 4)

9. Hilfskraftlenkung nach Anspruch 8, dadurch **gekennzeichnet,** daß der Fortsatz (36) eine Anschlagscheibe (38) trägt, über die der Betätigungsstößel (18) nach einem bestimmten Weg des Begrenzungskolbens (31) von diesem mitgenommen wird. (Fig. 5)

10. Hilfskraftlenkung nach einem der Ansprüche 1 bis 3, dadurch **gekennzeichnet,** daß eine zusammen mit dem Begrenzungskolben (31) verschiebbare Hülse (40) vorgesehen ist, über die der Schließkörper (14) des Ein1aß-Sitzventils (10, 11) nach einem bestimmten Weg des Begrenzungskolbens (31) mitgenommen wird. (Fig. 6)

11. Hilfskraftlenkung nach einem der Ansprüche 3, 8 oder 9, dadurch **gekennzeichnet,** daß in dem Begrenzungskolben (31) ein Nachsaugventil (45) angeordnet ist, über das der zugehörige Arbeitsraum des Servomotors mit dem Druckmittelbehälter (28) verbindbar ist. (Fig. 9)

## Claims

1. Power-assisted steering system for motor vehicles, having a steering valve (8) comprising two inlet seat valves (10, 11) and two outlet seat valves (12, 13), the closing bodies (14, 18) of which are displaceable by actuating plungers (16, 17) counter to the force of centring springs (30) in dependence upon a rotary motion of a steering spindle,
wherein the closing bodies (14) of the inlet seat valves (10, 11) are loadable in closing direction by the force of pressure springs (15) and are therefore closed in the neutral position of the steering valve (8),
wherein the outlet seat valves (12, 13) are open in the neutral position of the steering valve (8) and
wherein the inlet seat valves (10, 11) are opened only after closure of the respective associated outlet seat valve (12, 13),
characterized in
- that a limiting piston (31) is associated with each inlet seat valve (10, 11),
- that each limiting piston (31) is acted upon, on the one hand, by one of the centring springs (30) and by the initial pressure prevailing in a working chamber of a servomotor and, on the other hand, by a limiting force which in the neutral position of the steering valve (8) is greater than the force of the centring spring (30) and
- that the limiting piston (31) in the neutral position of the steering valve (8) rests against a stop shoulder (35) of a steering housing (1) receiving the steering valve (8).

2. Power-assisted steering system according to claim 1, characterized in that the cross section of the limiting piston (31) is smaller than the effective cross section of the closing body (14).

3. Power-assisted steering system according to claim 1 or 2, characterized in that the limiting force is generated by a limiting spring (32), the initial tension of which in the neutral position of the steering valve (8) is greater than the force of the centring spring (30).

4. Power-assisted steering system according to one of claims 1 to 3, characterized in that the limiting force is generated from the pressure prevailing in a receiver (42). (Fig. 7)

5. Power-assisted steering system according to claim 4, characterized in that the limiting force is generated by means of a pressure reducing valve (43) from the pressure prevailing in the receiver (42). (Fig.1)

6. Power-assisted steering system according to claim 5, characterized in that the pressure reducing valve (43) is controllable in dependence upon the vehicle speed.

7. Power-assisted steering system according to claim 4, characterized in that the limiting force is transmitted by an auxiliary piston (44) to the limiting piston (31), the diameter of the auxiliary piston (44) being smaller than the diameter of the limiting piston (31). (Fig. 8)

8. Power-assisted steering system according to claim 4, characterized in
- that each actuating plunger (18) has a coaxial extension (36), which passes sealingly through the limiting piston (31) into a limiting chamber (33), and
- that the actuating plunger (18) and the extension (36) have a through-bore (37), by means of which the limiting chamber (33) is connected to the pressure medium tank (28). (Fig.4)

9. Power-assisted steering system according to claim 8, characterized in that the extension (36) carries a stop disc (38), by means of which the actuating plunger (18) after a specific stroke of the limiting piston (31) is driven by the latter. (Fig.5)

10. Power-assisted steering system according to one of claims 1 to 3, characterized in that a sleeve (40) which is displaceable together with the limiting piston (31) is provided, by means of which the closing body (14) of the inlet seat valve (10, 11) is driven after a specific stroke of the limiting piston (31). (Fig.6)

11. Power-assisted steering system according to one of claims 3, 8 or 9, characterized in that disposed in the limiting piston (31) is a secondary intake valve (45), by means of which the associated working chamber of the servomotor is connectable to the pressure medium tank (28). (Fig.9)

## Revendications

1. Direction assistée pour véhicules automobiles comportant une soupape de direction (8) comprenant deux soupapes d'admission à sièges (10, 11) et deux soupapes d'échappement à sièges (12, 13), dont les organes de fermeture (14, 18) sont mobiles en translation par l'intermédiaire de poussoirs d'actionnement (16, 17), à l'encontre de la force exercée par des ressorts de centrage (30) en fonction d'un déplacement en rotation d'une vis de direction,
dans laquelle, les organes de fermeture (14) des soupapes d'admission à sièges (10, 11) sont sollicités par la force exercée par des ressorts de poussée (15) dans le sens de la fermeture et sont, de ce fait fermés lorsque la soupape de direction (8) est dans sa position neutre,
dans laquelle les soupapes d'échappement à sièges (12, 13) sont ouvertes dans la position neutre de la soupape de direction (8), et
dans laquelle, les soupapes d'admission à sièges (10, 11) ne s'ouvrent qu'après la fermeture de la soupape d'échappement à sièges correspondante (12, 13),
**caractérisée en ce que**
- à chaque soupape d'admission à sièges (10, 11) est associée un piston de limitation (31),
- chaque piston de limitation (31) est sollicité d'une part par un des ressorts de centrage (30) et par la pression régnant dans une chambre de travail d'un servomoteur, et d'autre part par une force de limitation qui est supérieure à la force du ressort de centrage (30) dans la position neutre de la soupape de direction (8), et
- le piston de limitation (31) s'appuie contre un épaulement d'arrêt (35) de la boîte de direction (1) logeant la soupape de direction (8), dans la position neutre de cette soupape de direction (8).

2. Direction assistée selon la revendication 1, **caracterisée en** **ce que** la section transversale du piston de limitation (31) est plus petite que la section efficace de l'organe de fermeture (14).

3. Direction assistée selon les revendications 1 ou 2, **caractérisée en ce que** la force de limitation est générée par un ressort de limitation (32) dont la précontrainte est supérieure à la force du ressort de centrage (30) dans la position neutre de la soupape de direction (8).

4. Direction assistée selon l'une des revendications 1 à 3, **caractérisée en ce que** la force de limitation est générée par la pression régnant dans un réservoir (42) (Fig. 7).

5. Direction assistée selon la revendication 4, **caractérisée en ce que** la force de limitation est générée par la pression régnant dans le réservoir (42) par l'intermédiaire d'une soupape réductrice de la pression (43) (Fig. 1).

6. Direction assisté selon la revendication 5, **caractérisée en ce que** la soupape réductrice de pression (43) est régulée en fonction de la vitesse du véhicule.

7. Direction assistée selon la revendication 4, **caractérisée en ce que** la force de limitation est transmise par un piston auxiliaire (44) sur le piston de limitation (31), le diamètre du piston auxiliaire (44) étant plus petit que le diamètre du piston de limitation (31) (Fig. 8).

8. Direction assistée selon la revendication 4, **caractérisée en ce que** :
chaque poussoir d'actionnement (18) présente un embout (36) coaxial qui est guidé à travers une chambre de limitation (33) par le piston de limitation (31), de manière étanche, et
le poussoir d'actionnement (18) et l'embout (36) comportent un alésage traversant (37) qui assure la communication de la chambre de limitation (33) avec le réservoir de fluide sous pression (28) (Fig. 4).

9. Direction assistée selon la revendication 8, **caractérisée en ce que** l'embout (36) porte un disque de butée (38) qui assure l'entraînement du poussoir d'actionnement (18) par le piston de limitation (31) après une course prédéterminée de ce dernier (Fig. 5).

10. Direction assistée selon l'une quelconque des revendications 1 à 3, **caractérisée en ce qu**'elle comporte une doute coulissante (40) liée au piston de limitation (31), cette doute entraînant l'organe de fermeture (14) de la soupape d'admission (10, 11) à sièges, après une course prédéterminée du piston de limitation (31) (Fig. 6).

11. Direction assistée selon l'une des revendications 3, 8 ou 9, **caractérisée en térisée en ce** q u'une soupape d'aspiration auxiliaire (45) est ménagée dans la piston de limitation (31), cette soupape étant agencée pour couper la chambre de travail correspondante du servomoteur avec le réservoir de fluide sous pression (28) (Fig. 9).
